# EUROPEAN PATENT APPLICATION

(11) **EP 4 542 208 A1**
(43) Date of publication of application: **23.04.2025**
(21) Application number: 24206319.6
(22) Date of filing: 14.10.2024
(51) Int. Cl.: G01N 23/04, H05G 1/54

(54) **X-RAY INSPECTION APPARATUS**

(30) Priority: 17.10.2023 JP 2023178786
(71) Applicant: Ishida Co., Ltd., Kyoto-shi Kyoto 606-8392 (JP)
(72) Inventor: YURUGI, Futoshi, Ritto-shi, Shiga, 520-3026 (JP)
(74) Representative: Global IP Europe Patentanwaltskanzlei

(57) **Abstract**

An X-ray inspection apparatus 1 includes an X-ray radiator 6 configured to generate X-rays by applying a first voltage between a negative pole 57 and a positive pole 56 in an X-ray bulb 50 and radiate X-rays to a transported article G, an X-ray detector 7 configured to detect the X-rays radiated from the X-ray radiator 6, an inspection unit 40 configured to generate an X-ray transmission image based on a detection result of the X-ray detector 7 and inspect the article G, and a control unit 40 configured to change a voltage applied between the negative pole 57 and the positive pole 56. The control unit 40 applies a second voltage higher than the first voltage between the negative pole 57 and the positive pole 56 before starting radiation of X-rays generated by applying the first voltage or after completing radiation of X-rays generated by applying the first voltage.

## Description

### TECHNICAL FIELD

One aspect of the present invention relates to an X-ray inspection apparatus.

### BACKGROUND

There has been a known X-ray inspection apparatus that includes a transportation unit that transports an article, an X-ray radiator that radiates X-rays to the article transported by the transportation unit, and an X-ray detection unit that detects X-rays passing through the article (for example, Patent Literature 1: Japanese Unexamined Patent Publication No. 2014-2023). In such an X-ray inspection apparatus, a voltage value applied to an X-ray tube is adjusted according to a type of article to be inspected, and an X-ray output value is appropriately switched.

### SUMMARY

In such an X-ray inspection apparatus, when an inspection is continued to be conducted under a condition of a low voltage in a range of, for example, 15 kV to 50 kV, a defect may occur in a part of an acquired X-ray transmission image due to inappropriate X-ray emission (anomalous discharge occurring in an X-ray bulb). In this case, it is necessary to reacquire the X-ray transmission image, which reduces inspection processing capacity of the X-ray inspection apparatus.

Therefore, an object of one aspect of the invention is to provide an X-ray inspection apparatus capable of suppressing a decrease in inspection processing capacity even when inspection is continued to be conducted under a condition of a low voltage.
(1) An X-ray inspection apparatus according to an aspect of the invention includes an X-ray radiator configured to generate X-rays by applying a first voltage between a negative pole and a positive pole in an X-ray bulb and radiate X-rays to a transported article, an X-ray detector configured to detect the X-rays radiated from the X-ray radiator, an inspection unit configured to generate an X-ray transmission image based on a detection result of the X-ray detector and inspect the article, and a control unit configured to change a voltage applied between the negative pole and the positive pole, wherein the control unit applies a second voltage higher than the first voltage between the negative pole and the positive pole before starting radiation of X-rays generated by applying the first voltage or after completing radiation of X-rays generated by applying the first voltage.
   With regard to the fact that, when the X-ray inspection apparatus is continued to be used under a condition of a low voltage, defects occur in a part of the acquired X-ray transmission image due to X-rays not being properly emitted, the inventors of the present application thought it is a cause that, when the voltage applied between the negative pole and the positive pole is low, a force pulling electrons from the negative pole to the positive pole is weak, and surplus electrons not striking a target stay inside the X-ray bulb. Therefore, the inventors thought that, when a high voltage is applied between the negative pole and the positive pole, these surplus electrons will strike the target and be expelled from the X-ray bulb, and X-rays are properly emitted from the X-ray bulb. Therefore, the controller applies the second voltage higher than the first voltage between the negative pole and the positive pole before starting radiation of X-rays generated by applying the first voltage, or after completing radiation of X-rays generated by applying the first voltage. In this way, an anomalous discharge occurring inside the X-ray bulb is suppressed, and even when inspection is continued to be conducted under a condition of a low voltage, a decrease in the inspection processing capacity can be suppressed.
(2) In the X-ray inspection apparatus according to (1), a range of the first voltage may be 15 kV to 50 kV, and a range of the second voltage may be 60 kV to 150 kV. In this configuration, even when the X-ray inspection apparatus is continued to be used under a condition of a low voltage in the range of 15 kV to 50 kV, by periodically applying a high voltage in the range of 60 kV to 150 kV, it is possible to suppress occurrence of defects caused by X-rays not being properly radiated to a part of the acquired X-ray transmission image.
(3) In the X-ray inspection apparatus according to (1) or (2), the second voltage may be twice or more the first voltage. In this configuration, by periodically applying the second voltage at least twice the first voltage, it is possible to suppress occurrence of defects caused by X-rays not being properly radiated to a part of the acquired X-ray transmission image.
(4) In the X-ray inspection apparatus according to any one of (1) to (3), the control unit may determine at least one of intensity and an application time of the second voltage based on at least one of a number of anomalous discharges occurring in the X-ray radiator and a radiation time of the X-rays in the X-ray radiator when a use start time of the X-ray bulb or a previous application time of the second voltage is set as a start point. In this configuration, surplus electrons inside the X-ray bulb can be appropriately removed.
(5) In the X-ray inspection apparatus according to any one of (1) to (4), the control unit may store a number of anomalous discharges occurring in the X-ray radiator when a use start time of the X-ray bulb or a previous application time of the second voltage is set as a start point, and determine whether or not to apply the second voltage based on the number of anomalous discharges. A time required to apply the second voltage, which is unrelated to acquisition of an X-ray transmission image, invades a time available for inspection, causing a decrease in the inspection processing capacity. In this configuration, the second voltage is applied as necessary, and thus a decrease in the inspection processing capacity can be minimized.
(6) In the X-ray inspection apparatus according to any one of (1) to (5), the control unit may store a radiation time of the X-rays in the X-ray radiator when a use start time of the X-ray bulb or a previous application time of the second voltage is set as a start point, and determine whether or not to apply the second voltage based on the radiation time. A time required to apply the second voltage, which is unrelated to acquisition of an X-ray transmission image, invades a time available for inspection, causing a decrease in the inspection processing capacity. In this configuration, the second voltage is applied as necessary, and thus a decrease in the inspection processing capacity can be minimized.
(7) In the X-ray inspection apparatus according to any one of (1) to (6), the control unit may apply the second voltage when power is turned on. In this configuration, surplus electrons inside the X-ray bulb are periodically and appropriately removed, so that a decrease in the inspection processing capacity can be suppressed even when inspection is continued to be conducted under a condition of a low voltage.

According to an aspect of the invention, even when inspection is continued to be conducted under a condition of a low voltage, a decrease in the inspection processing capacity can be suppressed.

### BRIEF DESCRIPTION OF THE DRAWINGS

FIG. 1 is a diagram of a configuration of an X-ray inspection apparatus according to one embodiment.
FIG. 2 is a diagram of an internal configuration of a shielding box illustrated in FIG. 1.
FIG. 3 is a schematic diagram illustrating a schematic configuration of an X-ray radiator illustrated in FIG. 1.
FIG. 4 is a graph illustrating the number of anomalous discharges occurring per day when continuing operation of applying a voltage of 30 kV (8 mA) between an anode and a cathode.
FIG. 5 is a graph illustrating the number of anomalous discharges occurring per day when continuing operation of applying a voltage of 30 kV (8 mA) after applying a voltage of 75 kV (4 mA) between the anode and the cathode for 10 minutes.

### DETAILED DESCRIPTION

Hereinafter, an X-ray inspection apparatus 1 according to one embodiment will be described with reference to the drawings. In the description of the drawings, the same elements are given the same reference numeral, and duplicated descriptions will be omitted.

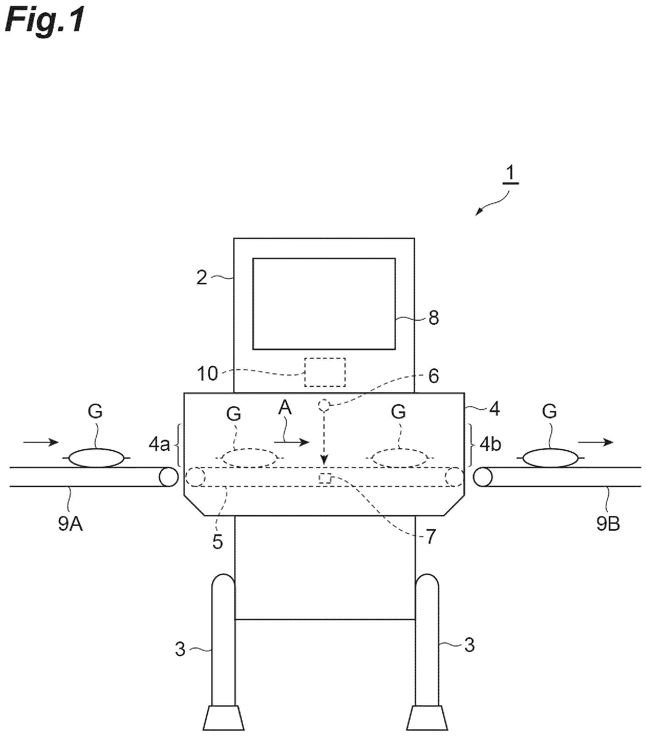

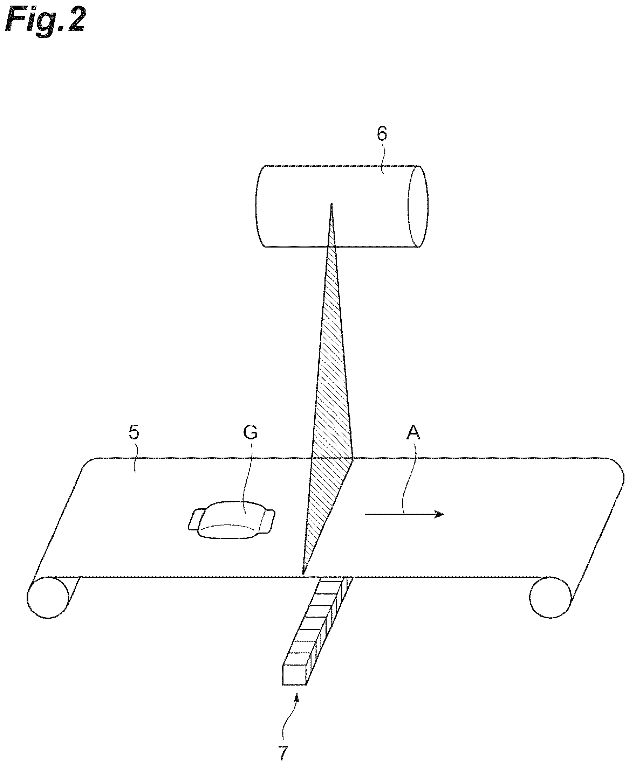

As illustrated in FIGS. 1 and 2, the X-ray inspection apparatus 1 includes an apparatus main body 2, support legs 3, a shielding box 4, a transport conveyor 5, an X-ray radiator 6, an X-ray detector 7, an LCD display 8, and a controller (control unit) 10. The X-ray inspection apparatus 1 acquires an X-ray transmission image of an article G while transporting the article G, and performs inspection of the article G (for example, inspection of the number of articles stored, inspection of foreign matter contamination, inspection of missing items, inspection of cracks and chips, etc.) based on the X-ray transmission image.

The X-ray inspection apparatus 1 is connected to an external power source (not illustrated) that supplies power to the X-ray inspection apparatus 1. In the X-ray inspection apparatus 1, an X-ray generation device 100 includes the X-ray radiator 6, the LCD display 8, and the controller 10. Note that the article G before inspection is carried into the X-ray inspection apparatus 1 by a carry-in conveyor 9A, and the article G after inspection is carried out of the X-ray inspection apparatus 1 by a carry-out conveyor 9B. The article G determined to be defective by the X-ray inspection apparatus 1 is sorted out of a production line by a sorting device (not illustrated) disposed downstream of the carry-out conveyor 9B, and the article G determined to be non-defective by the X-ray inspection apparatus 1 passes through the sorting device without change.

The apparatus main body 2 accommodates the controller 10, etc. The support legs 3 support the apparatus main body 2. The shielding box 4 is provided for the apparatus main body 2 and prevents leakage of X-rays. An inlet 4a and an outlet 4b are formed in the shielding box 4. The article G before inspection is carried into the shielding box 4 from the carry-in conveyor 9A via the inlet 4a, and the article G after inspection is carried out of the shielding box 4 to the carry-out conveyor 9B via the outlet 4b. Each of the inlet 4a and the outlet 4b is provided with an X-ray shielding curtain (not illustrated) to prevent leakage of X-rays.

The transport conveyor 5 is disposed inside the shielding box 4 and conveys the article G in a conveying direction A from the inlet 4a to the outlet 4b. The transport conveyor 5 is, for example, a belt conveyor bridged between the inlet 4a and the outlet 4b.

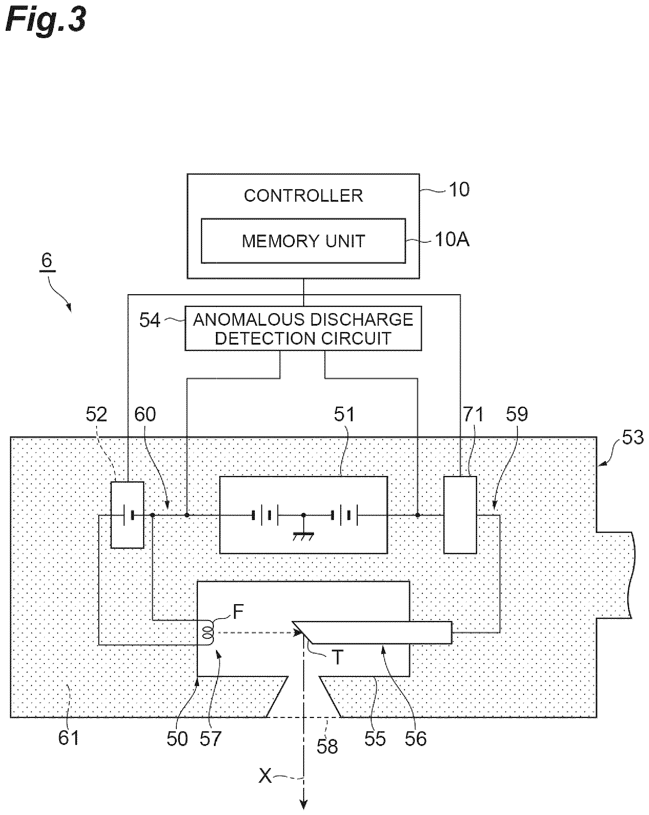

The X-ray radiator 6 is disposed inside the shielding box 4 and radiates X-rays to the article G transported by the transport conveyor 5. The X-ray radiator 6 has at least an X-ray bulb 50 (see FIG. 3) that radiates X-rays. Details of the X-ray radiator 6 will be described later.

The X-ray detector 7 is disposed inside the shielding box 4 and detects X-rays radiated from the X-ray radiator 6 and transmitted through the article G and the transport conveyor 5. The X-ray detector 7 is included in an X-ray detection device. The X-ray detector 7 is configured, for example, as a line sensor. Specifically, the X-ray detector 7 has a plurality of photodiodes arranged one-dimensionally in a horizontal direction perpendicular to the conveying direction A, and a scintillator disposed on an X-ray incident side of each photodiode. In this case, in the X-ray detector 7, X-rays incident on the scintillator are converted into light, and light incident on each photodiode is converted into an electrical signal.

The LCD display 8 is provided on the apparatus main body 2. The LCD display 8 has a display screen as a touch panel and a speaker. The LCD display 8 functions as an operation input unit that receives input of various conditions via the display screen. The LCD display 8 functions as a display unit that displays an inspection result, etc. of the X-ray inspection apparatus 1 via the display screen.

The controller 10 is disposed inside the apparatus main body 2 and controls operation of each unit of the X-ray inspection apparatus 1. The controller 10 includes a processor such as a CPU (Central Processing Unit), memories such as a ROM (Read Only Memory) and a RAM (Random Access Memory), and a storage such as an SSD (Solid State Drive). A program for controlling the X-ray inspection apparatus 1 is recorded in the ROM. The controller 10 can be configured as software in which a program stored in the ROM is loaded onto the RAM and executed by the CPU. The controller 10 may also be configured as hardware such as an electronic circuit. Note that characteristic control content of the controller 10 in this embodiment will be described in detail later.

A memory unit 10A includes one or more of a RAM, an HDD (Hard Disk Drive), a flash memory, etc. The memory unit 10A stores a generated X-ray transmission image, a detection time of an anomalous discharge, normal driving conditions (an applied voltage for each article G, an application time of a voltage for each article G, and a transport speed), etc.

The X-ray generation device 100 is a device that generates X-rays, and includes the X-ray radiator 6, the controller 10, and the LCD display 8 as illustrated in FIG. 1. As illustrated in FIG. 3, the X-ray radiator 6 includes an X-ray bulb 50, a tube power supply 51, a filament power supply 52, a tank 53, an anomalous discharge detection circuit 54, and a current monitoring mechanism 71. The X-ray bulb 50 includes an X-ray tube main body 55 made of stainless steel and ceramics, an anode 56 (positive electrode) that is disposed inside the X-ray tube main body 55 and includes a target T, and a cathode 57 (negative electrode) that is disposed inside the X-ray tube main body 55 and includes a filament F. An X-ray irradiation window 58 that transmits X-rays is formed in the X-ray tube main body 55.

The tube power supply 51 is connected to an external power source, and generates a predetermined DC voltage by boosting an input voltage using an inverter, etc. (not illustrated). The tube power supply 51 has a positive output terminal connected to the anode 56 and a negative output terminal connected to the cathode 57. The tube power supply 51 applies (supplies) a predetermined voltage to each of the anode 56 and the cathode 57, and generates a potential difference between the anode 56 and the cathode 57.

The filament power supply 52 supplies a filament current to the cathode 57. When a filament current is supplied from the filament power supply 52 to the cathode 57 while a predetermined potential difference is generated between the anode 56 and the cathode 57 as described above, the cathode 57 is heated in the X-ray bulb 50 so that thermions are emitted from the cathode 57, and the thermions emitted from the cathode 57 collide with the anode 56 (see a broken line arrow). As a result, X-rays are generated and radiated to the outside of the X-ray bulb 50 through the X-ray irradiation window 58 (see an alternated long and short dash line arrow X).

A tank 53 accommodates the X-ray bulb 50, the tube power supply 51, and the filament power supply 52. A first electric circuit 59 which is an electric circuit connecting the tube power supply 51 and the anode 56 (that is, an electric circuit including the anode 56), and a second electric circuit 60 which is an electric circuit connecting the tube power supply 51 and the cathode 57 (that is, an electric circuit including the cathode 57) are disposed inside the tank 53.

Insulating oil 61 is sealed inside the tank 53. The insulating oil 61 has electrical insulating properties, and ensures an electrical insulation state between respective portions having a potential difference in a space inside the tank 53 (for example, between the first electric circuit 59 and the second electric circuit 60, or between the first electric circuit 59 or the second electric circuit 60 and the tank 53 or the X-ray tube main body 55). The insulating oil 61 serves to cool the X-ray bulb 50, which generates high heat when generating X-rays. Note that, the tank 53 may be filled with a solid insulator such as epoxy or silicone instead of or in addition to the insulating oil 61.

The anomalous discharge detection circuit 54 is a circuit for detecting an anomalous discharge occurring inside the X-ray bulb 50. The anomalous discharge caused by a structure of the X-ray bulb 50 is generated inside the X-ray bulb 50 due to factors such as electrons emitted from the cathode 57 remaining inside the X-ray bulb 50 without colliding with the anode 56. More specifically, a discharge occurring between the anode 56 and the cathode 57 when gas inside the X-ray bulb 50 is ionized by electrons emitted from the cathode 57, a discharge occurring inside the X-ray bulb 50 when electrons emitted from the cathode 57 temporarily accumulate on an insulating wall of the X-ray tube and reach saturation, etc. correspond to the anomalous discharge caused by the structure of the X-ray bulb 50.

The anomalous discharge detection circuit 54 is connected to each of the first electric circuit 59, the second electric circuit 60 and the controller 40. The anomalous discharge detection circuit 54 includes a first detection unit that outputs a pulse in response to a change (sudden drop) in a voltage value in the first electric circuit 59, a second detection unit that outputs a pulse in response to a change (sudden drop) in a voltage value in the second electric circuit 60, an XOR circuit, an AND circuit, etc. When a change (sudden drop) in a voltage value occurs in at least one of the first electric circuit 59 and the second electric circuit 60, the anomalous discharge detection circuit 54 detects this change and outputs a signal to the controller 10.

The current monitoring mechanism 71 has a function of monitoring a current flowing through the X-ray bulb 50. The current monitoring mechanism 71 can include, for example, a current detector. Arrangement of the current monitoring mechanism 71 is not particularly limited, but the current monitoring mechanism 71 here is disposed between the tube power supply 51 and the anode 56.

The controller 10 controls the X-ray radiator 6. The controller 10 changes a voltage applied between the anode 56 and the cathode 57. Specifically, when the type of article G to be inspected is selected (reservation setting) via the LCD display 8, the controller 10 reads a voltage value (tube voltage) stored in association with the type of article G from the memory unit 10A, and applies the read voltage between the anode 56 and the cathode 57 when inspecting the article G. In this way, a current (tube current) corresponding to the applied voltage flows through the X-ray bulb 50, and X-rays of intensity suitable for X-ray inspection (suitable for acquiring a clear X-ray transmission image) are radiated onto the article G. A signal output from the X-ray detector 7 and subjected to A/D conversion is input to the controller 10. The controller 10 functions as an inspection unit that generates an X-ray transmission image of the article G based on the signal, and inspects the article G based on the X-ray transmission image.

In the X-ray inspection apparatus 1 of this embodiment, to improve inspection performance for thin articles or soft foreign matter, it is possible to set the tube voltage in a low voltage range of 15 kV to 50 kV In other words, when inspecting the article G, the controller 10 can apply a voltage in the range of 15 kV to 50 kV (hereinafter also referred to as a "first voltage") between the anode 56 and the cathode 57.

The controller 10 detects an anomalous discharge based on changes in the voltage values in both the first electric circuit 59 and the second electric circuit 60. The controller 10 determines that an anomalous discharge has occurred when changes (sudden drop) in the voltage values are detected in both the first electric circuit 59 and the second electric circuit 60. The controller 10 stores information related to a time when it is determined that an anomalous discharge has occurred in the memory unit 10A.

The controller 10 periodically applies a voltage in a range of 60 kV to 150 kV (hereinafter also referred to as a "second voltage"), which is higher than the voltage in the range of 15 kV to 50 kV, between the anode 56 and the cathode 57. More specifically, the controller 10 applies the second voltage between the anode 56 and the cathode 57 before starting radiation of X-rays generated by applying a voltage in the range of 15 kV to 50 kV, or after completing radiation of X-rays generated by applying a voltage in the range of 15 kV to 50 kV

The controller 10 applies the second voltage stored in the memory unit 10A in association with the first voltage. In addition, the second voltage applied by the controller 10 of this embodiment is set to be twice or more the first voltage. For example, the controller 10 operates the X-ray radiator 6 at a tube voltage of 75 kV (tube current at this time is 1 mA) for one minute before operating the X-ray radiator 6 at a tube voltage of 30 kV (tube current at this time is 8 mA).

Examples of timing before starting radiation of X-rays generated by applying the first voltage include timing when the X-ray inspection apparatus 1 is started up every morning (immediately after the X-ray inspection apparatus 1 is turned on), immediately before the type of item G to be inspected is selected (reservation setting is changed) and calibration is performed under those conditions, immediately after an inspection start button is pressed and before radiation of X-rays generated by applying the first voltage starts, etc.

In addition, examples of timing after starting radiation of X-rays generated by applying the first voltage include timing when the X-ray inspection apparatus 1 is stopped every evening (immediately before the X-ray inspection apparatus 1 is turned off), before the type of article G to be inspected is set (immediately after a button for starting to change the reservation setting is pressed), after the article G is discharged from the transport conveyor 5 (immediately after inspection is completed), etc.

Actions and effects of the X-ray inspection apparatus 1 of the above embodiment will be described. When the X-ray inspection apparatus 1 is continued to be used under a condition that the voltage applied between the anode 56 and the cathode 57 is a low voltage of 15 kV to 50 kV, defects (for example, a plurality of streaks) may occur in a part of the acquired X-ray transmission image due to X-rays not being properly emitted. The inventors of the present application discovered that, when the voltage applied between the anode 56 and the cathode 57 is low, a force pulling electrons from the cathode 57 to the anode 56 is weak, and surplus electrons not striking the target T stay inside the X-ray bulb 50, which is a cause. Therefore, the inventors thought that, when a voltage (high voltage) in the range of 60 kV to 150 kV is applied between the anode 56 and the cathode 57, these surplus electrons will strike the target T and be expelled from the X-ray bulb 50, and X-rays are properly emitted from the X-ray bulb 50.

In the X-ray inspection apparatus 1 of this embodiment, the controller 10 applies the second voltage higher than the first voltage between the anode 56 and the cathode 57 before starting radiation of X-rays generated by applying the first voltage, or after completing radiation of X-rays generated by applying the first voltage. In this way, an anomalous discharge occurring inside the X-ray bulb 50 is suppressed, and even when inspection is continued to be conducted under a condition in which a voltage (low voltage) in the range of 15 kV to 50 kV is applied, a decrease in the inspection processing capacity can be suppressed.

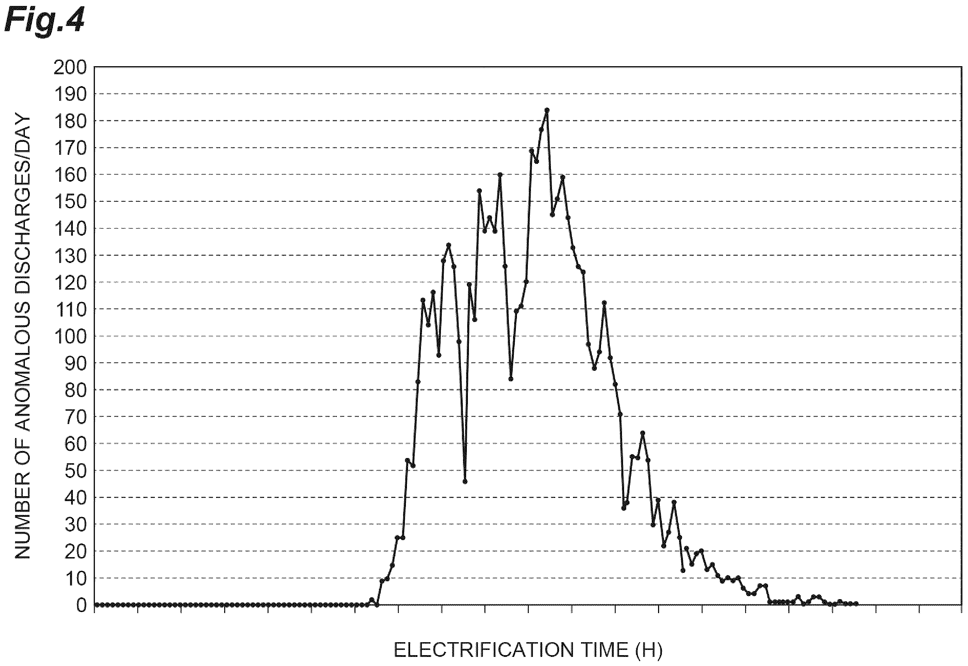

Here, a situation in which an anomalous discharge occurs when the first voltage is continued to be applied between the anode 56 and the cathode 57 was confirmed. In the X-ray inspection apparatus 1 illustrated in FIGS. 1 to 3, the number of anomalous discharges occurring per day when an operation of applying a voltage of 30 kV (8 mA) is applied between the anode 56 and the cathode 57 (after electrification is continued) was acquired. In this case, as illustrated in FIG. 4, it was confirmed that the number of anomalous discharges occurring per day increased rapidly after a predetermined electrification time had passed. Therefore, at the timing when the anomalous discharge started to increase rapidly, a voltage of 75 kV (4 mA), higher than the voltage of 30 kV (8 mA), was applied between the anode 56 and the cathode 57 for 10 minutes.

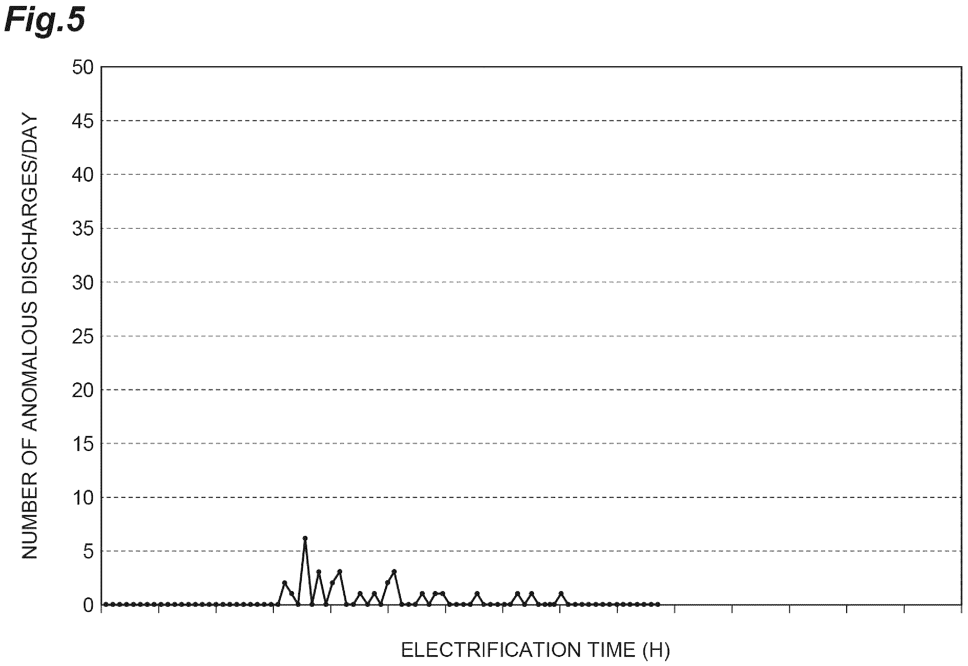

After the voltage of 75 kV (4 mA) was applied, the number of anomalous discharges occurring per day when the operation of applying the voltage of 30 kV (8 mA) was continued was acquired. In this case, as illustrated in FIG. 5, it was confirmed that the number of anomalous discharges occurring per day could be reduced. In this way, it was confirmed that, when the second voltage higher than the first voltage is applied between the anode 56 and the cathode 57, an anomalous discharge occurring inside the X-ray bulb 50 can be reduced, and a decrease in the inspection processing capacity can be prevented, even when inspection is continued to be conducted under a condition of a low voltage of 15 kV to 50 kV.

In the X-ray inspection apparatus 1 of this embodiment, a range of the first voltage is 15 kV to 50 kV, and a range of the second voltage is 60 kV to 150 kV In this configuration, even when the X-ray inspection apparatus is continued to be used under a condition of a low voltage in the range of 15 kV to 50 kV, by periodically applying a high voltage in the range of 60 kV to 150 kV, it is possible to suppress occurrence of defects caused by X-rays not being properly radiated to a part of the acquired X-ray transmission image.

In the X-ray inspection apparatus 1 of this embodiment, the second voltage is at least twice the first voltage. In this configuration, by periodically applying the second voltage at least twice the first voltage, it is possible to suppress occurrence of defects caused by X-rays not being properly radiated to a part of the acquired X-ray transmission image.

In the X-ray inspection apparatus 1 of this embodiment, the controller 10 can apply the second voltage when the power is turned on. With this configuration, surplus electrons inside the X-ray bulb 50 are periodically and appropriately removed, so that even when inspection is continued to be conducted under a condition of a low voltage in the range of 15 kV to 50 kV, the number of anomalous discharges occurring inside the X-ray bulb 50 is reduced, and thus a decrease in the inspection processing capacity can be suppressed.

Even though one embodiment has been described above, one aspect of the invention is not limited to the above embodiment. Various modifications are possible without departing from the spirit of the invention.

In the X-ray inspection apparatus 1 of this embodiment, a description has been given using an example in which the second voltage applied by the controller 10 is the second voltage stored in the memory unit 10A, that is, a set value set for the first voltage (in other words, set for each article G). However, the invention is not limited thereto. For example, the controller 10 may apply, as the second voltage, a variable value that varies depending on various conditions (operating conditions) set in the X-ray radiator 6. For example, the controller 10 may determine at least one of intensity and an application time of the second voltage based on at least one of the number of anomalous discharges occurring in the X-ray radiator 6 and an X-ray radiation time of the X-ray radiator 6 when a use start time of the X-ray bulb 50 or a previous application time of the second voltage is set as a start point. Note that the number of anomalous discharges occurring in the X-ray radiator 6 and the X-ray radiation time of the X-ray radiator 6 are stored in the memory unit 10A.

To apply the second voltage and expel surplus electrons inside the X-ray bulb 50 from the X-ray bulb 50 in a shorter time, a shortest application time of the second voltage may be determined based on a maximum voltage (for example, 75 kV) that can be set in the X-ray inspection apparatus 1. However, in this case, the burden on the X-ray bulb 50 or the X-ray detector 7 becomes large. For this reason, when there is sufficient time to apply the second voltage (for example, after the end of production for one day), a voltage lower than the maximum voltage (for example, 60 kV) may be set and applied for an application time longer than the shortest application time, thereby expelling surplus electrons inside the X-ray bulb 50 from the X-ray bulb 50. In this way, it is possible to apply the second voltage while suppressing deterioration of each component.

In the X-ray inspection apparatus 1 of the above embodiment and the above modified example, a description has been given using an example in which the second voltage is periodically applied at the timing described above. However, the invention is not limited thereto. For example, the controller 10 may determine whether or not to apply the second voltage each time at the timing described above.

As an example of a method of determination, the controller 10 may determine whether or not to apply the second voltage based on the number of anomalous discharges occurring in the X-ray radiator 6 when a use start time of the X-ray bulb 50 or a previous application time of the second voltage is set as a start point. Note that the controller 10 can acquire the number of anomalous discharges from the memory unit 10A.

As another example of a method of determination, the controller 10 may determine whether or not to apply the second voltage based on an X-ray radiation time in the X-ray radiator 6 when a use start time of the X-ray bulb 50 or a previous application time of the second voltage is set as a start point. Note that the controller 10 can acquire the radiation time from the memory unit 10A.

With this modified configuration, surplus electrons inside the X-ray bulb 50 can be appropriately removed. Furthermore, when the second voltage is periodically applied, a time required to apply the first voltage and conduct inspection is invaded. However, with this modified configuration, the number of times the second voltage is applied can be minimized. Furthermore, a decrease in the inspection processing capacity of the X-ray inspection apparatus 1 can be minimized.

In the X-ray inspection apparatus 1 of the above embodiment and the above modified example, a description has been given using an example in which a voltage twice or more the first voltage is applied when applying the second voltage. However, when the first voltage is set to 15 kV to 50 kV and the second voltage is set to 60 kV to 150 kV, the condition that a voltage twice or more the first voltage is applied when applying the second voltage may be eliminated. Further, even when the first voltage is not set to the range of 15 kV to 50 kV and the second voltage is not set to the range of 60 kV to 150 kV as in the X-ray inspection apparatus 1 of the above embodiment and the above modified example, the controller 10 may be configured to apply a voltage twice or more the first voltage when applying the second voltage.

In the X-ray inspection apparatus 1 of the above embodiment and the above modified example, a description has been given using an example in which the X-ray detector 7 has the plurality of photodiodes arranged one-dimensionally in the horizontal direction (width direction) perpendicular to the conveying direction A. However, the X-ray detector 7 may have a plurality of photodiodes arranged in a planar shape (two-dimensionally) in the conveying direction A and the width direction. In addition, the X-ray detector 7 may be, for example, a sensor (multi-energy sensor) that detects X-rays in each of a plurality of energy regions passing through the article G. Furthermore, in the X-ray inspection apparatus 1 of the above embodiment and the above modified example, a description has been given using an example in which the scintillator is provided on the X-ray incident side of each photodiode. However, this may be eliminated and the X-ray detector 7 may be replaced with a direct conversion type detector capable of detecting X-rays using a photon counting method.

## Claims

1. An X-ray inspection apparatus comprising:
an X-ray radiator configured to generate X-rays by applying a first voltage between a negative pole and a positive pole in an X-ray bulb and radiate X-rays to a transported article;
an X-ray detector configured to detect the X-rays radiated from the X-ray radiator;
an inspection unit configured to generate an X-ray transmission image based on a detection result of the X-ray detector and inspect the article; and
a control unit configured to change a voltage applied between the negative pole and the positive pole,
wherein the control unit is configured to change the voltage between the negative pole and the positive pole to a second voltage higher than the first voltage before starting radiation of X-rays generated by applying the first voltage or after completing radiation of X-rays generated by applying the first voltage.

2. The X-ray inspection apparatus according to claim 1, wherein a range of the first voltage is 15 kV to 50 kV, and a range of the second voltage is 60 kV to 150 kV.

3. The X-ray inspection apparatus according to claim 1 or 2, wherein the second voltage is twice or more the first voltage.

4. The X-ray inspection apparatus according to any one of claims 1 to 3, wherein the control unit is configured to determine at least one of intensity and an application time of the second voltage based on at least one of a number of anomalous discharges occurring in the X-ray radiator and a radiation time of the X-rays in the X-ray radiator when a use start time of the X-ray bulb or a previous application time of the second voltage is set as a start point of time.

5. The X-ray inspection apparatus according to any one of claims 1 to 4, wherein the control unit is configured to store a number of anomalous discharges occurring in the X-ray radiator when a use start time of the X-ray bulb or a previous application time of the second voltage is set as a start point of time, and determine whether or not to apply the second voltage based on the number of anomalous discharges.

6. The X-ray inspection apparatus according to any one of claims 1 to 5, wherein the control unit is configured to store a radiation time of the X-rays in the X-ray radiator when a use start time of the X-ray bulb or a previous application time of the second voltage is set as a start point of time, and determine whether or not to apply the second voltage based on the radiation time.

7. The X-ray inspection apparatus according to any one of claims 1 to 6, wherein the control unit is configured to control the X-ray radiator such that the second voltage is applied between the negative pole and the positive pole when power is turned on.
